# EUROPÄISCHE PATENTSCHRIFT

(11) **EP 1 233 294 B1**
(45) Veröffentlichungstag und Bekanntmachung des Hinweises auf die Patenterteilung: **13.04.2005**
(21) Anmeldenummer: 02100127.6
(22) Anmeldetag: 12.02.2002
(51) Int. Cl.: G02B 21/00

(54) **Mikroskop**
Microscope
Microscope

(30) Priorität: 14.02.2001 DE 10106696
(43) Veröffentlichungstag der Anmeldung: 21.08.2002
(73) Patentinhaber: Leica Microsystems (Schweiz) AG, 9435 Heerbrugg (CH)
(72) Erfinder: Pensel, Jürgen Dr., 9450, Altstätten (CH); Sander, Ulrich Dr., 9445 Rebstein (CH)
(74) Vertreter: Reichert, Werner F., Dr.

(56) Entgegenhaltungen:
- DE-A- 3 402 354
- DE-A- 19 739 428
- PATENT ABSTRACTS OF JAPAN vol. 1997, no. 07, 31. Juli 1997 (1997-07-31) -& JP 09 073031 A (OLYMPUS OPTICAL CO LTD), 18. März 1997 (1997-03-18)
- PATENT ABSTRACTS OF JAPAN vol. 2000, no. 13, 5. Februar 2001 (2001-02-05) -& JP 2000 284184 A (NIKON CORP), 13. Oktober 2000 (2000-10-13)
- PATENT ABSTRACTS OF JAPAN vol. 006, no. 027 (P-102), 17. Februar 1982 (1982-02-17) -& JP 56 147114 A (KONAN CAMERA KENKYUSHO:KK), 14. November 1981 (1981-11-14)

## Beschreibung

Die Erfindung betrifft ein Mikroskop gemäß dem Oberbegriff des Anspruchs 1. Insbesondere Operationsmikroskope müssen beim Operieren in unterschiedlichen Gebrauchslagen eingesetzt werden können und zu diesem Zweck sehr rasch und universell verstellbar sein. So ist beispielsweise aus der DE 33 05 650 A1 ein vorzugsweise als Operationsmikroskop einsetzbares Gerät ersichtlich, das zwischen den Okularen und dem Objektivteil zwei miteinander gelenkig verbundene Arme aufweist, in deren Innerem der optische Strahlengang über Linsen und auslenkbare Spiegel erfolgt. Diese Anordnung ist jedoch konstruktiv sehr aufwendig, in der Verstellbarkeit beschränkt und erfordert außerdem viel Platz.

Aus der DE 34 02 354 A1 ist ferner ein vorzugsweise ortsfest einsetzbares Mikroskop bekannt, das ein Höhenverstellen des Okulars gegenüber dem Objekttisch ermöglicht. Diese Höhenverstellung dient dazu, damit das Gerät optimal an unterschiedlich groß gewachsene Bedienungspersonen angepasst werden kann. Dadurch soll über längere Zeit ein ermüdungsfreies Arbeiten ermöglicht werden. Die Verstellbarkeit erfolgt dabei in der Weise, dass ein Schlitten, welcher die Okulare trägt, gegenüber dem Objektivträger entlang einer mit Prismenführungen versehenen Tragsäule verschiebbar ist. Eine solche Verschiebbarkeit ist jedoch nur dann sinnvoll, wenn die optischen Strahlen im Bereich zwischen Objektivteil und Einblickteil bzw. Okular parallel verlaufen, da sonst durch das Verschieben das im Okular erscheinende Bild optisch verändert wird. Diese Verschiebbarkeit ist zudem begrenzt, da bei größeren Verschiebungen eine unerwünschte Vignettierung auftritt, welche sich dadurch äußert, dass ab einer bestimmten Einstellung nur noch ein Bildausschnitt des ursprünglichen Bildes im Okular sichtbar ist.

Der Erfindung liegt daher die Aufgabe zugrunde, ein im Bereich zwischen Objektiv und Okular universell verstellbares Mikroskop zu schaffen, das es ermöglichen soll, eine Veränderung der Baulänge ohne Vignettierung zu bewerkstelligen, so dass ein Anwender optimale Einblickbedingungen hat.

Erfindungsgemäß wird diese Aufgabe dadurch gelöst, dass der Tubus im optischen Strahlengang wenigstens einen in der Länge veränderbaren Bereich aufweist, in dem in Abhängigkeit von der gewählten Länge optische Korrekturelemente ein- und/oder ausbringbar sind.

Durch die ein- und/oder ausbringbaren Korrekturelemente wird erreicht, dass in jeder Arbeitsstellung des Mikroskops im Okular stets etwa derselbe Bildausschnitt in der gewünschten Vergrößerung sichtbar und scharf abgebildet ist. Die von einer Längenverstellung im parallelen Strahlengang bekannten Nachteile der Vignettierung werden somit vermieden. Erfindungsgemäß entfällt die Notwendigkeit, den Verlängerungsbereich im parallelen Strahlengang anzuordnen.

Eine zweckmäßige Lösung besteht darin, dass der längenverstellbare Bereich teleskopisch ausziehbar ist. Diese Lösung eignet sich insbesondere für Stereomikroskope, da sie eine sehr kompakte Bauweise ermöglicht. Gegeneinander teleskopisch verschiebbare Elemente können dabei gleichzeitig als mechanische Führung sowie als optische Abdichtung des Strahlenganges dienen.

Vorteilhaft ist der längenverstellbare Bereich in einem parallelen Teil des Strahlenganges angeordnet. Dadurch sind die erforderlichen Korrekturmaßnahmen über einen weiten Verstellbereich relativ gering, da diese nur die Erscheinungen der sog. Vignettierung kompensieren müssen.

Allerdings können die längenveränderbaren Bereiche in einem konvergierenden oder divergierenden Teil des Strahlenganges angeordnet sein. Je nach Art des Strahlenganges und jeweiliger Arbeitsstellung sind jeweils unterschiedliche Korrekturmaßnahmen erforderlich.

Als Korrekturmaßnahmen sind vorteilhaft in den Strahlengang ein- und ausschwenkbare oder ein- und ausschiebbare Korrekturlinsen - gegebenenfalls Gruppen solcher Linsen - vorgesehen. Dabei können je nach Erfordernis einzelne Korrekturlinsen oder eine Kombination von Korrekturlinsen eingesetzt werden.

Zweckmäßigerweise sind die Korrekturlinsen in Abhängigkeit von der Stellung des längenveränderbaren Bereichs mittels eines Getriebes in den Strahlengang einschwenkbar oder einschiebbar. Durch das Getriebe kann auch das gleichzeitige Ein- oder Ausbringen mehrerer Linsen miteinander gekoppelt bzw. synchronisiert werden.

Eine vorteilhafte Lösung besteht darin, dass die Korrekturlinsen in Abhängigkeit von der Stellung des längenveränderbaren Bereichs automatisch in den Strahlengang einschwenkbar sind. Die jeweilige Stellung des längenverstellbaren Bereichs kann beispielsweise direkt mechanisch erfasst und für das Einschwenken der Korrekturlinsen verwendet werden.

Je nach Erfordernis kenn es zweckmäßig sein, dass die Korrekturlinsen eine positive oder eine negative Brechkraft aufweisen. Linsen mit unterschiedlicher Brechkraft können auch in Kombination miteinander für die Korrektur eingesetzt werden. Die Erfindung ist jedoch nicht auf Linsen eingeschränkt. Es können auch planparallele Platten oder dgl. zum Einsatz gelangen.

Vorteilhaft sind Sensoren für die Detektion der Stellung des längenveränderbaren Bereichs sowie wenigstens ein Logikelement für die Zuordnung der Korrekturelemente zu Stellungen des längenveränderbaren Bereichs vorgesehen. Solche Sensoren können beispielsweise analoge bzw. digitale Wegmessysteme oder sogenannte Endschalter sein. Die Signale des Logikelementes können direkt zur Steuerung des Ein- bzw. Ausbringens der Korrekturlinsen verwendet werden. Alternativ kommen einfache Getriebe oder Hebelarmkonstruktionen in Betracht.

Zur universellen Verstellbarkeit des Mikroskops ist zweckmäßigerweise der Tubus bzw. das Mikroskop um eine im wesentlichen senkrecht zum Strahlengang S verlaufende Schwenkachse C schwenkbar. Damit kann das Okular vom Betrachter ergonomisch optimal eingestellt werden, ohne dabei die Lage des Mikroskops gegenüber dem zu betrachtenden Objekt wesentlich zu verändern.

Die Erfindung soll nachstehend an Hand der sie beispielsweise wiedergebenden Zeichnungen näher erläutert werden. Es zeigen:
- Fig. 1:: einen Teil eines erfindungsgemäßen - als Stereomikroskop ausgebildeten - Gerätes, wobei sich die beiden Okulare in unterschiedlich ausgezogenen Längs-Stellungen befinden, teilweise im Schnitt dargestellt, und
- Fig. 2:: einen Längsschnitt durch eine Variante eines Mikroskops gemäß der Erfindung.

Die Abmessungen und Verschiebewege sind in den Figuren nur symbolisch angegeben und nicht einschränkend zu verstehen.

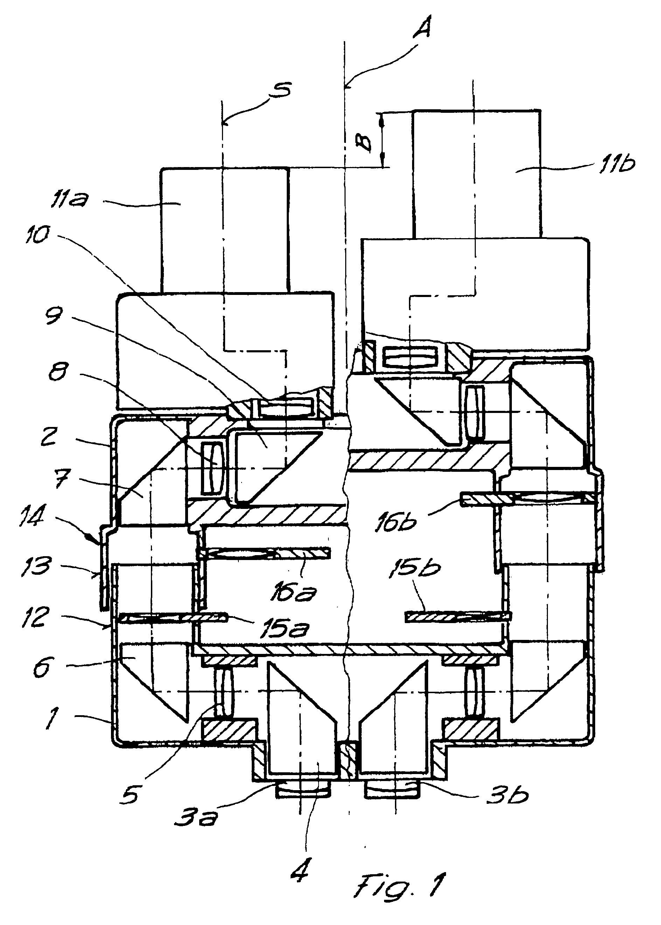

Das aus Fig. 1 ersichtliche Gerät verfügt im wesentlichen über einen Gehäuseunterteil 1 und einen Gehäuseoberteil 2. Das Gehäuseoberteil 2 ist gegenüber dem Gehäuseunterteil 1 entlang der Längsachse A um den Verstellweg B verschiebbar. Diese Verschiebbarkeit dient dem optimalen Anpassen des Gerätes an die lokalen Gegebenheiten bzw. die momentan unterschiedlichen Anforderungen der Bedienungsperson.

Am unteren Ende des Gehäuseunterteils 1 sind zwei Objektive 3a, 3b angeordnet. Der als strichpunktierte Linie angedeutete Strahlengang S verläuft im Gehäuse über Prismen 4, 6, 7 und 9 sowie über Linsen 5, 8 und 10. Okulare 11a, 11b sind - wie an sich bekannt - mit dem Gehäuseoberteil 2 beweglich verbunden. Diese Beweglichkeit dient beispielsweise der Anpassung des Mikroskops an den individuellen Pupillenabstand der Bedienungsperson.

Teleskopisch ineinander greifende, rohrförmige Ansätze 12, 13 am Gehäuseunterteil 1 und am Gehäuseoberteil 2 bilden einen teleskopisch ausziehbaren Tubus 14. Im Bereich des Tubus 14 sind ein- und ausrückbare Korrekturlinsen 15a, 15b und 16a, 16b angeordnet. Diese Korrekturlinsen 15a, 15b und 16a, 16b sind insbesondere dann notwendig, wenn der Strahlengang S zwischen den Prismen 6 und 7 nicht parallel verläuft oder dann, wenn eine Vignettierung störend ist. Die Korrekturlinsen 15a, 15b und 16a, 16b können rein manuell betätigt oder in Abhängigkeit von der Auszugstellung des Tubus 14 auch automatisch gesteuert werden.

Die Korrekturlinsen 15a, 15b und 16a, 16b sind rein symbolisch zu verstehen. Je nach Erfordernis der Optik können diese eine positive oder negative Brechkraft aufweisen, d.h. als Sammel- oder Streulinsen ausgebildet sein. Anstelle einzelner Linsen können auch ganze Systeme von Linsen ein- und ausgerückt werden.

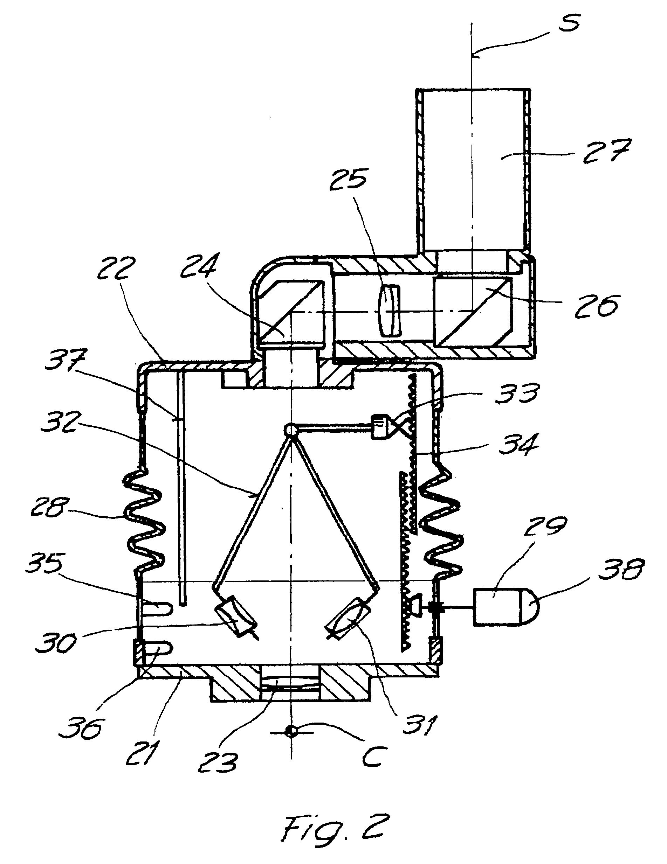

Das aus Fig. 2 ersichtliche, im Schnitt dargestellte Monokular besteht im wesentlichen aus einem Gehäuseunterteil 21 und einem gegenüber diesem verstellbaren Gehäuseoberteil 22. Am Gehäuseunterteil 21 ist ein Objektiv 23 angeordnet. Der als strichpunktierte Linie angedeutete Strahlengang S verläuft über ein Prisma 24, eine Linse 25 sowie ein weiteres Prisma 26. Ein Okular 27 ist mit dem Gehäuseoberteil 22 verbunden. Ein Faltenbalg 28 verbindet das Gehäuseunterteil 21 mit dem Gehäuseoberteil 22 und schließt den Strahlengang S somit gegen außen ab. Ein rein manuell betriebener oder mittels Getriebe motorisch gesteuerter, symbolisch dargestellter Stellantrieb 29 dient dem Verstellen des Okulars 27 gegenüber dem Objektiv 23. Zur Kompensation beim Verstellen des Okulars 27 sind Korrekturlinsen 30, 31 in den Strahlengang S ein- und ausrückbar. Die Korrekturlinsen sind mit einem Schwenkträger 32 verbunden. Die Betätigung des Schwenkträgers 32 erfolgt über ein symbolisch dargestelltes Getriebe 33. Das Getriebe 33 kann mit dem Stellantrieb 29 oder mit dem Gehäuseunterteil 21 beispielsweise über Zahnstangen 34 mechanisch gekoppelt werden. Somit erfolgt das Ein- und Ausrücken der Korrekturlinsen 30, 31 entsprechend der jeweiligen Auszugstellung des Okulars 27 automatisch. Zur Steuerung der Bewegung können dabei symbolisch angedeutete Sensoren 35, 36 eingesetzt werden, welche mit einem Fühler 37 und einem mit dem Stellantrieb 29 in Verbindung stehenden Logikelement 38 zusammenarbeiten.

Zum besseren Verständnis ist die aus Fig. 2 ersichtliche Ausführung als Monokular dargestellt. Die Erfindung ist jedoch nicht auf ein Monokular beschränkt. Im Fall eines beispielsweise als Stereomikroskop ausgebildeten Gerätes sind im Prinzip zwei solche Monokulare parallel nebeneinander angeordnet.

### Bezugszeichenliste

- 1: Gehäuseunterteil
- 2: Gehäuseoberteil
- 3a, 3b: Objektiv(e)
- 4: Prisma
- 5: Linse
- 6: Prisma
- 7: Prisma
- 8: Linse
- 9: Prisma
- 10: Linse
- 11 a, 11 b: Okular(e)
- 12: Ansatz
- 13: Ansatz
- 14: Tubus
- 15a,15b: Korrekturlinse(n)
- 16a, 16b: Korrekturlinse(n)

- 21: Gehäuseunterteil
- 22: Gehäuseoberteil
- 23: Objektiv
- 24: Prisma
- 25: Linse
- 26: Prisma
- 27: Okular
- 28: Faltenbalg
- 29: Stellantrieb

- 30, 31: Korrekturlinse(n)
- 32: Schwenkträger
- 33: Getriebe
- 34: Zahnstange(n)
- 35, 36: Sensor(en)
- 37: Fühler
- 38: Logikelement

- A: Längsachse
- B: Verstellweg
- C: Schwenkachse
- S: Strahlengang

## Patentansprüche

1. Mikroskop, insbesondere Stereomikroskop, mit wenigstens einem Objektiv (23; 3a, 3b), einem oder mehreren Okularen (27; 11 a, 11 b) mit ein- oder mehrteiligen optischen Bauteilen - wie Linsen, Spiegeln oder Umlenkprismen - zur Bildung eines Strahlengangs (S) vom Objektiv (23; 3a, 3b) zum Okular (27; 11a, 11b) und mit einem Tubus (14, 28), **dadurch gekennzeichnet, dass** der Tubus (14, 28) im optischen Strahlengang (S) wenigstens einen in der Länge veränderbaren Bereich aufweist und dass in den Strahlengang (S) in Abhängigkeit von der gewählten Länge ein-und ausschwenkbare oder ein- und ausschiebbare Korrekturlinsen (15a, 15b; 16a, 16b; 30, 31) - gegebenenfalls Gruppen solcher Linsen - vorgesehen sind.

2. Mikroskop nach Anspruch 1, **dadurch gekennzeichnet, dass** der längenveränderbare Bereich (12, 13) teleskopisch ausziehbar ist.

3. Mikroskop nach Anspruch 1 oder 2, **dadurch gekennzeichnet, dass** der längenveränderbare Bereich (12, 13) in einem parallelen Teil des Strahlengangs (S) angeordnet ist.

4. Mikroskop nach Anspruch 1 oder 2, **dadurch gekennzeichnet, dass** der längenveränderbare Bereich (12, 13) in einem konvergierenden oder divergierenden Teil des Strahlengangs (S) angeordnet ist.

5. Mikroskop nach Anspruch 1, **dadurch gekennzeichnet, dass** die Korrekturlinsen (15a, 15b; 16a, 16b; 30, 31) in Abhängigkeit von der Stellung des längenveränderbaren Bereichs (12, 13) mittels eines Getriebes (33) in den Strahlengang (S) einschwenkbar oder einschiebbar sind.

6. Mikroskop nach Anspruch 1 oder 5, **dadurch gekennzeichnet, dass** die Korrekturlinsen (15a, 15b; 16a, 16b, 30, 31) in Abhängigkeit von der Stellung des längenveränderbaren Bereichs (12, 13) vorzugsweise über ein Getriebe (33) automatisch in den Strahlengang (S) einschwenkbar sind.

7. Mikroskop nach einem der vorhergehenden Ansprüche, **dadurch gekennzeichnet, dass** planparallele Platten in den Strahlengang (S) einschieb- oder einschwenkbar sind.

8. Mikroskop nach einem der vorhergehenden Ansprüche, **dadurch gekennzeichnet, dass** Sensoren (35, 36) für die Detektion der Stellung des längenveränderbaren Bereichs (12, 13) sowie wenigstens ein Logikelement (37) für die Zuordnung der Korrekturlinsen (15a, 15b; 16a, 16b; 30, 31) zu Stellungen des längenveränderbaren Bereichs (12, 13) vorgesehen sind.

9. Mikroskop nach einem der vorhergehenden Ansprüche, **dadurch gekennzeichnet, dass** der Tubus (14, 28) bzw. das Mikroskop um eine im wesentlichen senkrecht zum Strahlengang (S) verlaufende Schwenkachse (C) schwenkbar ist.

## Claims

1. Microscope, in particular stereomicroscope, having at least one objective (23; 3a, 3b), one or more eyepieces (27; 11a, 11b) having one-part or multiple-part optical components - such as lenses, mirrors, or deflection prisms - to form a beam path (S) from the objective (23; 3a, 3b) to the eyepiece (27; 11a, 11b), and having a tube (14, 28), **characterized in that** the tube (14, 28) in the optical beam path (S) comprises at least one region of modifiable length, and **in that** correction lenses (15a, 15b; 16a, 16b; 30, 31) which can be pivoted or slid into and out of the beam path (S) as a function of the selected length - if appropriate groups of such lenses - are provided.

2. Microscope according to Claim 1, **characterized in that** the modifiable-length region (12, 13) can be pulled out telescopically.

3. Microscope according to Claim 1 or 2, **characterized in that** the modifiable-length region (12, 13) is arranged in a parallel part of the beam path (S).

4. Microscope according to Claim 1 or 2, **characterized in that** the modifiable-length region (12, 13) is arranged in a converging or diverging part of the beam path (S).

5. Microscope according to Claim 1, **characterized in that** the correction lenses (15a, 15b; 16a, 16b; 30, 31) can be pivoted or slid into the beam path (S) as a function of the position of the modifiable-length region (12, 13), by means of a linkage (33).

6. Microscope according to Claim 1 or 5, **characterized in that** the correction lenses (15a, 15b; 16a, 16b; 30, 31) can be automatically pivoted into the beam path (S) as a function of the position of the modifiable-length region (12, 13), preferably by way of a linkage (33).

7. Microscope according to one of the foregoing claims, **characterized in that** plane-parallel plates can be slid or pivoted into the beam path (S).

8. Microscope according to one of the foregoing claims, **characterized in that** sensors (35, 36) for detection of the position of the modifiable-length region (12, 13), as well as at least one logic element (37) for allocating the correction lenses (15a, 15b; 16a, 16b; 30, 31) to positions of the modifiable-length region (12, 13) are provided.

9. Microscope according to one of the foregoing claims, **characterized in that** the tube (14, 28) or the microscope is pivotable about a pivot axis (C) extending substantially perpendicular to the beam path (S).

## Revendications

1. Microscope en particulier microscope stéréoscopique avec au moins un objectif (23 ; 3a, 3b), un ou plusieurs oculaires (27 ; 11a, 11b) avec des composants optiques constitués d'une ou plusieurs parties comme des lentilles, miroirs ou prismes de déflexion, pour former un chemin de rayons (S) de l'objectif (23 ; 3a, 3b) vers l'oculaire (27 ; 11a, 11b) et avec un tube (14, 28), **caractérisé en ce que** le tube (14, 28) comprend au moins une plage de longueur modifiable dans le chemin de rayons (S) et qu'en fonction de la longueur choisie, on prévoit dans le chemin de rayons (S), des lentilles de correction (15a, 15b ; 16a, 16b ; 30, 31) ou le cas échéant des groupes de telles lentilles, pouvant pivoter ou coulisser vers l'intérieur ou l'extérieur.

2. Microscope selon la revendication 1, **caractérisé en ce que** la plage de longueur modifiable (12, 13) peut être extensible de manière télescopique.

3. Microscope selon la revendication 1 ou 2, **caractérisé en ce que** la plage de longueur modifiable (12, 13) est disposée dans une partie parallèle du chemin de rayons (S).

4. Microscope selon la revendication 1 ou 2, **caractérisé en ce que** la plage de longueur modifiable (12, 13) est disposée dans une partie convergente ou divergente du chemin de rayons (S).

5. Microscope selon la revendication 1, **caractérisé en ce que** les lentilles de correction (15a, 15b ; 16a, 16b ; 30, 31) peuvent pivoter ou coulisser vers l'intérieur dans le chemin de rayons (S) au moyen d'une commande (33) en fonction du réglage de la plage de longueur modifiable (12, 13).

6. Microscope selon la revendication 1 ou 5, **caractérisé en ce que** les lentilles de correction (15a, 15b ; 16a, 16b ; 30, 31) peuvent de préférence pivoter automatiquement vers l'intérieur dans le chemin de rayons (S) au moyen d'une commande (33) en fonction du réglage de la plage de longueur modifiable (12, 13).

7. Microscope selon une des revendications précédentes, **caractérisé en ce que** des plaques planes parallèles peuvent pivoter ou coulisser vers l'intérieur dans le chemin de rayons (S).

8. Microscope selon une des revendications précédentes, **caractérisé en ce qu'**on prévoit des capteurs (35, 36) pour la détection du réglage de la plage de longueur modifiable (12, 13) ainsi qu'au moins un élément logique (37) pour coordonner les lentilles de correction (15a, 15b ; 16a, 16b ; 30, 31) avec les réglages de la plage de longueur modifiable (12, 13).

9. Microscope selon une des revendications précédentes, **caractérisé en ce que** le tube (14, 28) ou le microscope peut pivoter autour d'un axe de pivotement (C) s'étendant essentiellement perpendiculairement au chemin de rayons (S).
